# EUROPÄISCHE PATENTANMELDUNG

(11) **EP 3 364 106 A1**
(43) Veröffentlichungstag der Anmeldung: **22.08.2018**
(21) Anmeldenummer: 18157348.6
(22) Anmeldetag: 19.02.2018
(51) Int. Cl.: F23K 5/06, F23R 3/34, F02C 7/22, F02C 7/228

(54) **BRENNSTOFFEINSPRITZVORRICHTUNG FÜR EINE GASTURBINE**

(30) Priorität: 21.02.2017 DE 102017202800
(71) Anmelder: Rolls-Royce Deutschland Ltd & Co KG, 15827 Blankenfelde-Mahlow (DE)
(72) Erfinder: Klinger, Holger, 14532 Kleinmachnow (DE); Schober, Peter, 14532 Kleinmachnow (DE)

(57) **Zusammenfassung**

Die Erfindung betrifft eine Brennstoffeinspritzvorrichtung (1), umfassend eine Vielzahl von Hauptbrennern (2), eine Vielzahl von Pilotbrennern (3), eine Brennstoffhauptleitung (20) mit einem ersten Leitungsstrang (21), einem zweiten Leitungsstrang (22) und einer Hauptverteilungsleitung (23), eine Brennstoffpilotleitung (30) mit einer Pilotzufuhrleitung (31) und einer Pilotverteilungsleitung (32), wobei jeder Hauptbrenner (2) mit der Hauptverteilungsleitung (23) verbunden ist und jeder Pilotbrenner (3) mit der Pilotverteilungsleitung (32) verbunden ist, eine Stellvorrichtung (4) zum Bereitstellen von Brennstoff zur Brennstoffhauptleitung (20) und/oder zur Brennstoffpilotleitung (30), und eine Steuereinheit (10), welche eingerichtet ist, die Stellvorrichtung (4) zwischen einem ersten Modus für ausschließlichen Pilotbrennerbetrieb und einem zweiten Modus für einen gemeinsamen Pilotbrennerbetrieb und Hauptbrennerbetrieb derart zu stellen, dass im ersten Modus ein Tankanschluss (9) mit dem ersten Leitungsstrang (21) der Brennstoffhauptleitung verbunden ist und der zweite Leitungsstrang (22) der Brennstoffhauptleitung mit der Pilotzufuhrleitung (31) verbunden ist, um den Brennstoff vor dem Zuführen zur Brennstoffpilotleitung (30) durch die Brennstoffhauptleitung (20) zu führen, um eine Kühlung der Hauptbrenner (2) zu erreichen.

## Beschreibung

Die vorliegende Erfindung betrifft eine Brennstoffeinspritzvorrichtung einer Gasturbine, insbesondere einer Fluggasturbine. Ferner betrifft die vorliegende Erfindung eine Gasturbine, insbesondere Fluggasturbine mit einer Brennstoffeinspritzvorrichtung sowie ein Verfahren zum Betreiben einer Brennstoffeinspritzvorrichtung einer Gasturbine.

Brennstoffeinspritzvorrichtungen für Fluggasturbinen sind aus dem Stand der Technik in unterschiedlichen Ausgestaltungen bekannt. Bekannte Brennstoffeinspritzvorrichtungen umfassen hierbei eine Vielzahl von Hauptbrennern und eine Vielzahl von Pilotbrennern. Im Leerlaufbetrieb der Gasturbine genügt es, wenn die Pilotbrenner aktiv sind. Wenn eine hohe Leistung nachgefragt wird, beispielsweise bei einem Steigflug, werden sowohl die Hauptbrenner als auch die Pilotbrenner betrieben. Wenn sowohl die Hauptbrenner als auch die Pilotbrenner betrieben werden, erfolgt eine Kühlung der Brenner durch den zugeführten, relativ kühlen Brennstoff. Aus der US 2013/0061599 A1 ist eine Brennstoffeinspritzvorrichtung bekannt, welche eine Kühlung von Hauptbrennern vorsieht, wenn ausschließlich die Pilotbrenner betrieben werden. Hierbei wird ein Brennstoffstrom aus der Zuführung zu den Pilotbrennern zu einer Leitung, welcher üblicherweise Brennstoff zu den Hauptbrennern zuführt, abgezweigt. Allerding erfolgt diese Abzweigung in einer Brennstoffdüse, so dass der Brennstoff schon eine relativ hohe Temperatur aufweist, da die Brennstoffdüse unmittelbar an der Brennkammer der Gasturbine angeordnet ist. Insofern ist nur eine suboptimale Kühlung von Hauptbrennern möglich.

Es ist daher Aufgabe der vorliegenden Erfindung, eine Brennstoffeinspritzvorrichtung sowie eine Gasturbine mit einer Brennstoffeinspritzvorrichtung und ein Verfahren bereitzustellen, welche bei einfachem Aufbau und einfacher, kostengünstiger Herstellbarkeit eine verbesserte Kühlung von Hauptbrennern in einem Modus, wenn ausschließlich Pilotbrenner betrieben werden, bereitstellt.

Diese Aufgabe wird durch eine Brennstoffeinspritzvorrichtung mit den Merkmalen des Anspruches 1 und eine Gasturbine mit den Merkmalen des Anspruchs 9 sowie ein Verfahren mit den Merkmalen des Anspruchs 11 gelöst. Die Unteransprüche zeigen jeweils bevorzugte Weiterbildungen der Erfindung.

Die Brennstoffeinspritzvorrichtung mit den Merkmalen des Anspruchs 1 ermöglicht eine verbesserte Kühlung von Hauptbrennern, wenn ausschließlich Pilotbrenner der Brennstoffeinspritzvorrichtung betrieben werden. Somit können Schäden an den Hauptbrennern sicher vermieden werden. Hierbei muss kein zusätzliches Kühlleitungsnetz oder dgl. vorgesehen werden, um die Hauptbrenner zu kühlen, sondern bereits vorhandene Leitungen in der Brennstoffeinspritzvorrichtung können verwendet werden. Dies wird erfindungsgemäß dadurch erreicht, dass die Brennstoffeinspritzvorrichtung eine Vielzahl von Hauptbrennern, eine Vielzahl von Pilotbrennern sowie eine Brennstoffhauptleitung umfasst. Die Brennstoffhauptleitung weist einen ersten und einen zweiten Leitungsstrang sowie eine Hauptverteilungsleitung auf. Die Leitungsstränge sind jeweils separat mit der Hauptverteilungsleitung verbunden. Ferner ist eine Brennstoffpilotleitung mit wenigstens einer Pilotzufuhrleitung und wenigstens einer Pilotverteilungsleitung vorgesehen. Es sei angemerkt, dass bevorzugt die Pilotbrenner in zwei Gruppen aufgeteilt sind, um eine Zündfähigkeit zu verbessern. Jeder Hauptbrenner ist mit der Hauptverteilungsleitung verbunden und jeder Pilotbrenner ist mit der Pilotverteilungsleitung verbunden. Ferner umfasst die Brennstoffeinspritzvorrichtung eine Stellvorrichtung zum Bereitstellen von Brennstoff zu den Pilotbrennern und/oder den Hauptbrennern sowie eine Steuereinheit. Die Steuereinheit ist eingerichtet, die Stellvorrichtung zwischen einem ersten Modus für ausschließlichen Pilotbrennerbetrieb und einem zweiten Modus für gemeinsamen Pilotbrennerbetrieb und Hauptbrennerbetrieb zu stellen. Dabei ist die Steuereinheit eingerichtet, im ersten Modus einen Tankanschluss mit dem ersten Leitungsstrang der Brennstoffhauptleitung zu verbinden und den zweiten Leitungsstrang der Brennstoffhauptleitung mit der Pilotzufuhrleitung zu verbinden. Somit stellt die Steuereinheit sicher, dass der Brennstoff vor dem Zuführen zur Brennstoffpilotleitung durch die Hauptverteilungsleitung der Brennstoffhauptleitung geführt wird, um eine Kühlung der Hauptbrenner, welche an der Brennstoffhauptleitung angeordnet sind, zu erreichen. Somit wird kühlerer Brennstoff zuerst in die Brennstoffhauptleitung zur Hauptverteilungsleitung geleitet, um die Hauptbrenner zu kühlen und anschließend über den zweiten Leitungsstrang der Brennstoffhauptleitung zurück zur Pilotzufuhrleitung geleitet und von dort zu den Pilotbrennern. Der zweite Leitungsstrang wird demnach als Rückleitung genutzt. Somit gelangt zwar im ausschließlichen Betrieb der Pilotbrenner schon leicht erwärmter Brennstoff zu den Pilotbrennern, allerdings genügt der etwas erwärmte Brennstoff an den Pilotbrennern bei ausschließlichem Pilotbrennerbetrieb immer noch dazu, die Pilotbrenner ausreichend zu kühlen, insbesondere, da die Leistung der Pilotbrenner üblicherweise deutlich geringer ist als eine Leistung der Hauptbrenner.

Weiter bevorzugt ist die Steuereinheit eingerichtet, die Stellvorrichtung im zweiten Modus für einen gemeinsamen Betrieb von Pilotbrennern und Hauptbrennern derart zu stellen, dass im zweiten Modus ein Tankanschluss mit der Pilotzufuhrleitung, dem ersten und zweiten Leitungsstrang der Brennstoffhauptleitung verbunden ist. Somit kann über den ersten und zweiten Leitungsstrang den Hauptbrennern eine ausreichende Menge von Brennstoff zugeführt werden und gleichzeitig auch den Pilotbrennern über die Pilotzufuhrleitung eine ausreichende Menge an Brennstoff zugeführt werden.

Besonders bevorzugt umfasst die Stellvorrichtung zum Bereitstellen von Brennstoff zu den Pilotbrennern und/oder den Hauptbrennern eine erste und eine zweite Ventileinheit, welche in Reihe zwischen dem Tankanschluss einerseits sowie der Brennstoffhauptleitung und der Brennstoffpilotleitung andererseits angeordnet sind. Die ersten und zweiten Ventileinheiten können dabei Wegeventile sein oder alternativ auch Schieberventile. Besonders bevorzugt ist die erste Ventileinheit ein 3/2-Wege-Ventil oder eine Ventileinheit, die die Funktion eines 3/2-Wege-Ventils aufweist, und die zweite Ventileinheit ein 5/2-Wege-Ventil oder eine Ventileinheit, die die Funktion eines 5/2-Wege-Ventils aufweist.

Besonders bevorzugt sind zwischen der ersten Ventileinheit und der zweiten Ventileinheit eine erste und eine zweite Verbindungsleitung angeordnet. Hierdurch ist es möglich, dass mittels der ersten Ventileinheit bestimmt wird, welcher Modus, d.h., ausschließlicher Pilotbrennerbetrieb oder gemeinsamer Pilotbrennerbetrieb und Hauptbrennerbetrieb oder ausschließlicher Hauptbrennerbetrieb oder ein Teillastbetrieb beider Brenner, ausgewählt wird. Mittels der zweiten Ventileinheit kann dann eine evtl. notwendige Kühlung von Brennern realisiert werden.

Um einen möglichst einfachen Aufbau der Brennstoffeinspritzvorrichtung sicherzustellen, ist besonders bevorzugt die erste Ventileinheit in jeder Stellung derart ausgestaltet, dass ein Tankanschluss mit der zweiten Verbindungsleitung verbunden ist. Weiter bevorzugt ist die zweite Ventileinheit in jeder Stellung derart ausgebildet, dass die erste Ventileinheit mit dem ersten Leitungsstrang der Brennstoffhauptleitung verbunden ist.

Für einen besonders kompakten Aufbau ist die Hauptverteilungsleitung der Brennstoffhauptleitung eine geschlossene Ringleitung. Besonders bevorzugt ist die geschlossene Ringleitung eine Kreisringleitung. Vorzugsweise sind die Hauptbrenner an einem inneren Umfang der Kreisringleitung angeordnet.

Weiter bevorzugt ist ein erster Anschluss des ersten Leitungsstrangs an der Hauptverteilungsleitung und ein zweiter Anschluss des zweiten Leitungsstrangs an der Hauptverteilungsleitung derart angeordnet, dass die geschlossene Ringleitung in einen ersten und zweiten Ringabschnitt unterteilt ist, welche gleiche Leitungslängen aufweisen. Wenn somit die geschlossene Ringleitung eine Kreisringleitung ist, sind der erste und zweite Anschluss vorzugsweise einander um 180° gegenüber angeordnet.

Gemäß einer weiteren bevorzugten Ausgestaltung der vorliegenden Erfindung umfasst die Brennstoffeinspritzvorrichtung ferner eine Vielzahl von Sperrventilen, wobei jeweils ein Sperrventil zwischen einem Hauptbrenner und der Hauptverteilungsleitung der Brennstoffhauptleitung angeordnet ist. Die Sperrventile sind vorzugsweise druckgesteuerte Sperrventile, welche bei Vorhandensein eines vorbestimmten Drucks öffnen. Somit kann das Zuschalten der Hauptbrenner druckgesteuert erfolgen. Alternativ bevorzugt sind die Sperrventile mit einem Signal angesteuerte Ventile, wobei die Ansteuerung hydraulisch oder elektrisch erfolgen kann.

Weiter bevorzugt weist die Brennstoffeinspritzvorrichtung eine gerade Anzahl von Hauptbrennern auf.

Ferner betrifft die vorliegende Erfindung eine Gasturbine, insbesondere eine Fluggasturbine, mit einer erfindungsgemäßen Brennstoffeinspritzvorrichtung.

Ferner betrifft die vorliegende Erfindung ein Verfahren zum Betreiben einer Brennstoffeinspritzvorrichtung einer Gasturbine, insbesondere einer Fluggasturbine. Die Gasturbine umfasst eine Vielzahl von Hauptbrennern und eine Vielzahl von Pilotbrennern, wobei in einem ersten Modus zum Betrieb der Brennstoffeinspritzvorrichtung ausschließlich die Pilotbrenner betrieben werden, wobei Brennstoff vor dem Zuführen in eine Brennstoffpilotleitung zum Kühlen der Hauptbrenner durch die Brennstoffhauptleitung geführt wird. Dabei weist die Brennstoffhauptleitung einen ersten und zweiten Leitungsstrang auf, wobei einer der beiden Leitungsstränge als Rückleitung verwendet wird, über welche der Brennstoff zur Brennstoffpilotleitung geführt wird. Somit können die Hauptbrenner mit dem relativ kalten Brennstoff gekühlt werden und der leicht erwärmte Brennstoff wird anschließend zum Betrieb der Pilotbrenner verwendet.

Vorzugsweise wird beim erfindungsgemäßen Verfahren in einem zweiten Modus für einen gemeinsamen Pilotbrennerbetrieb und Hauptbrennerbetrieb ein Tankanschluss mit der Pilotzufuhrleitung, einem ersten Leitungsstrang und einem zweiten Leitungsstrang der Brennstoffhauptleitung verbunden.

Nachfolgend wird die Erfindung anhand eines bevorzugten Ausführungsbeispiels in Verbindung mit der Zeichnung beschrieben. In der Zeichnung ist:
- Fig. 1: ein Gasturbinentriebwerk mit einer erfindungsgemäßen Brennstoffeinspritzvorrichtung,
- Fig. 2: eine schematische Darstellung der Brennstoffeinspritzvorrichtung gemäß der vorliegenden Erfindung in einem ersten Modus im ausschließlichen Pilotbrennerbetrieb,
- Fig. 3: eine schematische, vergrößerte Darstellung von Hauptbrennern und Pilotbrennern von Fig. 2, und
- Fig. 4: eine schematische Darstellung der Brennstoffeinspritzvorrichtung in einem zweiten Modus, in welchem die Pilotbrenner und die Hauptbrenner betrieben werden.

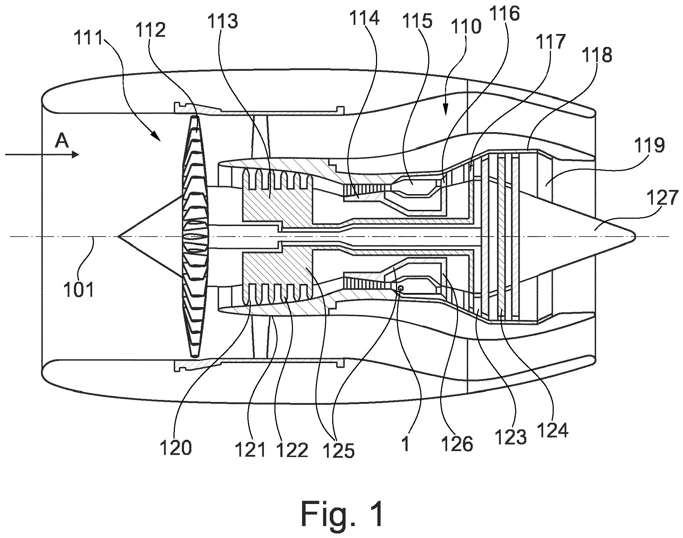

Ein Gasturbinentriebwerk 110 gemäß Fig. 1 ist ein allgemein dargestelltes Beispiel einer Turbomaschine, bei der die Erfindung Anwendung finden kann. Das Gasturbinentriebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 beziehungsweise der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

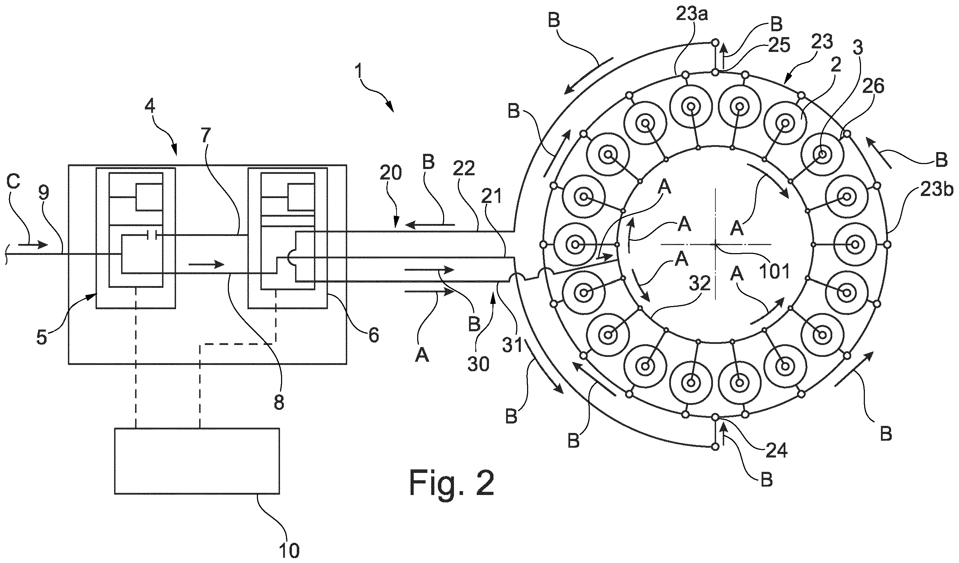

In den Fig. 2, 3 und 4 ist eine Brennstoffeinspritzvorrichtung 1 gemäß einem bevorzugten Ausführungsbeispiel der Erfindung im Detail dargestellt.

Wie aus Fig. 2 ersichtlich ist, umfasst die Brennstoffeinspritzvorrichtung 2 eine Vielzahl von Hauptbrennern 2 und eine Vielzahl von Pilotbrennern 3. Jedem Hauptbrenner 2 ist dabei ein Pilotbrenner 3 zugeordnet. Eine Anzahl der Hauptbrenner 2 ist dabei bevorzugt gerade. Die Hauptbrenner 2 werden über eine Brennstoffhauptleitung 20 mit Kraftstoff versorgt. Die Brennstoffhauptleitung 20 umfasst einen ersten Leitungsstrang 21, einen zweiten Leitungsstrang 22 und eine Hauptverteilungsleitung 23. Wie aus Fig. 2 ersichtlich ist, sind der erste Leitungsstrang 21 und der zweite Leitungsstrang 22 jeweils separat mit der Hauptverteilungsleitung 23 verbunden.

Die Hauptverteilungsleitung 23 ist eine geschlossene Ringleitung, welche als Kreis ausgebildet ist. Die Vielzahl von Hauptbrennern 2 ist dabei bevorzugt an einem inneren Umfang der Hauptverteilungsleitung 23 angeordnet.

Ein erster Anschluss 24 des ersten Leitungsstrangs 21 an der Hauptverteilungsleitung 23 und ein zweiter Anschluss 25 des zweiten Leitungsstrangs 22 und der Hauptverteilungsleitung 23 sind an der Hauptverteilungsleitung 23 dabei derart angeordnet, dass die Hauptverteilungsleitung 23 in einen ersten Ringabschnitt 23a und einen zweiten Ringabschnitt 23b unterteilt ist, welche eine ähnliche oder gleiche Leitungslänge aufweisen. Wie aus Fig. 2 ersichtlich ist, liegen somit der erste Anschluss 24 und der zweite Anschluss 25 einander bevorzugt um 180° an der Hauptverteilungsleitung 23 gegenüber.

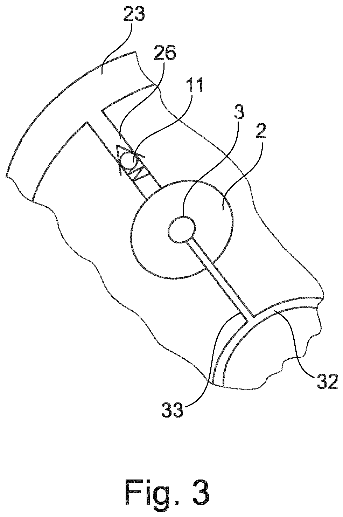

Wie aus Fig. 3 ersichtlich ist, ist jeder Hauptbrenner 2 über eine Stichleitung 26 mit der Hauptverteilungsleitung 23 verbunden. In der Stichleitung 26 ist jeweils ein Rückschlagventil 11 angeordnet. Hierdurch kann eine druckgesteuerte Versorgung der Hauptbrenner in Abhängigkeit eines Drucks in der Hauptverteilungsleitung 23 realisiert werden.

Wie weiter in Fig. 3 gezeigt, sind die Pilotbrenner 3 mittig in den Hauptbrennern angeordnet.

Die Brennstoffeinspritzvorrichtung 1 umfasst ferner eine Brennstoffpilotleitung 30, welche eine Pilotzufuhrleitung 31 und eine Pilotverteilungsleitung 32 umfasst. Die Pilotverteilungsleitung 32 ist ebenfalls eine geschlossene Ringleitung und in diesem Ausführungsbeispiel ebenfalls als Kreisring ausgebildet. Jeder Pilotbrenner 3 ist über eine Stichleitung 33 mit der Pilotverteilungsleitung 32 verbunden (vgl. Fig. 3).

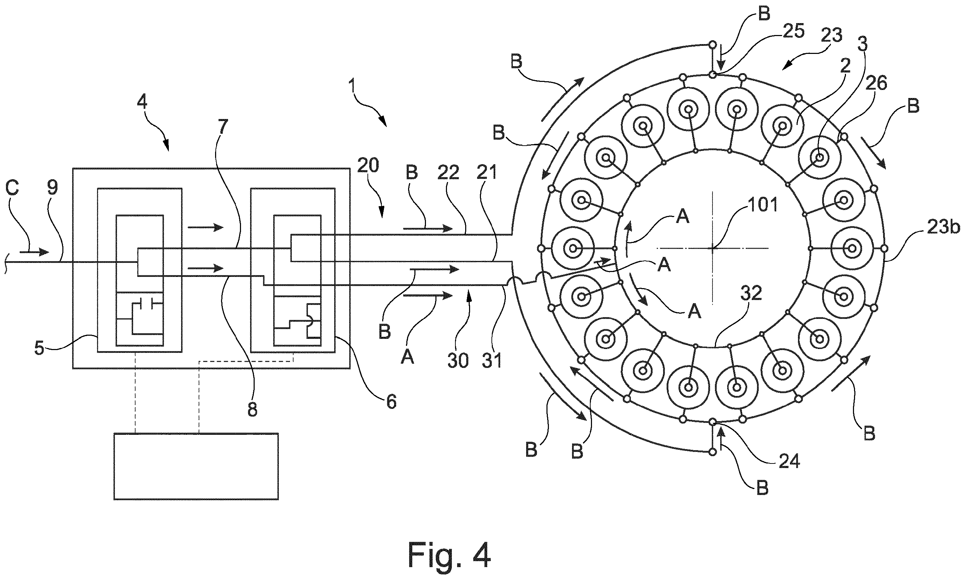

Es sei angemerkt, dass in den Fig. 2 und 4 aufgrund einer besseren Übersichtlichkeit nur jeweils ein Hauptbrenner und ein Pilotbrenner bezeichnet sind. Ebenfalls sind die Rückschlagventile sowie die Stichleitungen 26, 33 in den Fig. 2 und 4 nicht bezeichnet.

Die Brennstoffeinspritzvorrichtung 1 umfasst ferner eine Stellvorrichtung 4 zum Bereitstellen von Brennstoff zu den Pilotbrennern und/oder den Hauptbrennern. Die Stellvorrichtung 4 umfasst eine erste Ventileinheit 5 und eine zweite Ventileinheit 6. Ferner ist eine Steuereinheit 10 vorgesehen, welche die erste Ventileinheit 5 und die zweite Ventileinheit 6 steuert.

Zwischen der ersten Ventileinheit 5 und der zweiten Ventileinheit 6 ist eine erste Verbindungsleitung 7 und eine zweite Verbindungsleitung 8 vorgesehen. Das Bezugszeichen 9 bezeichnet einen Tankanschluss, über welchen Brennstoff aus einem Tank, ggf. über ein Brennstoffbemessungssystem, zur Stellvorrichtung 4 zugeführt wird.

Die Brennstoffeinspritzvorrichtung 1 kann nun in verschiedenen Betriebsmodi betrieben werden. Abhängig von einer Leistungsanforderung der Gasturbine können beispielsweise ausschließlich die Pilotbrenner 3 betrieben werden oder beispielsweise bei einer hohen Leistungsanforderung sowohl die Pilotbrenner 3 als auch die Hauptbrenner 2 betrieben werden.

In einem ersten Modus, welcher in Fig. 2 dargestellt ist, werden ausschließlich die Pilotbrenner 3 betrieben. Hierbei wird die erste Ventileinheit 5 in eine derartige Stellung gebracht, dass der Tankanschluss 9 ausschließlich mit der zweiten Verbindungsleitung 8 verbunden ist. Die zweite Ventileinheit 6 wird in eine Stellung gebracht, in welcher die zweite Verbindungsleitung 8 mit dem ersten Leitungsstrang 21 der Brennstoffhauptleitung 20 verbunden ist. Ferner ist durch die zweite Ventileinheit 6 sichergestellt, dass der zweite Leitungsstrang 22 mit der Pilotzufuhrleitung 31 verbunden ist.

Somit wird Brennstoff über den Tankanschluss 9, wie durch den Pfeil C angedeutet, durch die erste Ventileinheit 5 und die zweite Ventileinheit 6 in den ersten Leitungsstrang 21 zugeführt. Über den ersten Leitungsstrang 21 wird der Brennstoff zur Hauptverteilungsleitung 23 zugeführt, was in Fig. 2 durch die Pfeile B angedeutet ist. Am ersten Anschluss 24 verzweigt sich der Brennstoffstrom über die beiden Ringabschnitte 23a, 23b zum zweiten Anschluss 25. Vom zweiten Anschluss 25 strömt der Brennstoff über den zweiten Leitungsstrang 22 zurück zur zweiten Ventileinheit 6. Die zweite Ventileinheit 6 ist derart geschaltet, dass der zweite Leitungsstrang 22 mit der Pilotzufuhrleitung 31 verbunden ist (vgl. Fig. 2). Somit strömt der von der Hauptverteilungsleitung 23 zurückströmende Kraftstoff über den zweiten Leitungsstrang 22 in die Pilotzufuhrleitung 31 und von dort in die Pilotverteilungsleitung 32 zu den Pilotbrennern 3.

Somit wird im ausschließlichen Pilotbrennerbetrieb der Brennstoff zuerst über den ersten Leitungsstrang 21 in die Hauptverteilungsleitung 23 und zurück über den zweiten Leitungsstrang 22 in die Brennstoffpilotleitung 30 geführt. Dadurch wird zuerst der noch kühle Brennstoff vom Tankanschluss 9 direkt zur Hauptverteilungsleitung 23 geführt und kann dort die Hauptbrenner 2, welche sich auch im ausschließlichen Pilotbrennerbetrieb erwärmen, kühlen. Dadurch nimmt der Brennstoffstrom etwas Wärme auf und wird über den zweiten Leitungsstrang 22 zurück zur zweiten Ventileinheit 6 und von dort in die Brennstoffpilotleitung 30 geführt und den Pilotbrennern 3 zugeführt.

Im Vergleich dazu zeigt Fig. 4 die Brennstoffeinspritzvorrichtung 1 in einem zweiten Modus, in welchem sowohl die Vielzahl von Hauptbrennern 2 als auch die Vielzahl von Pilotbrennern 3 aktiv ist. Hierbei ist die Steuereinheit 10 eingerichtet, die Stellvorrichtung 4 im zweiten Modus für den gemeinsamen Pilotbrenner und Hauptbrennerbetrieb zu stellen. Im zweiten Modus ist der Tankanschluss 9 über die erste Ventileinheit 5 mit der ersten Verbindungsleitung 7 und der zweiten Verbindungsleitung 8 zur zweiten Ventileinheit 6 verbunden. In der zweiten Ventileinheit 6 ist die erste Verbindungsleitung 7 mit dem ersten Leitungsstrang 21 und dem zweiten Leitungsstrang 22 der Brennstoffhauptleitung 20 verbunden. Die zweite Verbindungsleitung 8 ist über die zweite Ventileinheit 6 mit der Pilotzufuhrleitung 31 verbunden. Somit wird die Hauptverteilungsleitung 23 durch den ersten und zweiten Leitungsstrang 21, 22 mit Brennstoff versorgt. Eine Kühlung der Hauptbrenner und der Pilotbrenner erfolgt dabei in beiden Fällen durch den relativ kühlen Brennstoff aus dem Tank.

Wie ein Vergleich der Fig. 2 und 4 ergibt, hat sich somit die Strömungsrichtung in dem zweiten Leitungsstrang 22 im zweiten Modus umgekehrt. Der zweite Modus wird beispielsweise bei Fluggasturbinen beim Steig- oder Reiseflug verwendet.

Somit kann bei der vorliegenden Erfindung eine Kühlung von Hauptbrennern 2, insbesondere auch bei einem ausschließlichen Pilotbrennerbetrieb ermöglicht werden. Hierbei sind keine zusätzlichen Leitungen notwendig, sondern durch eine Umschaltung der Verbindungen zwischen dem ersten und zweiten Leitungsstrang 21, 22 der Brennstoffhauptleitung 20 kann eine Kühlung im ausschließlichen Pilotbrennerbetrieb erreicht werden.

Es sei angemerkt, dass im beschriebenen Ausführungsbeispiel als erste Ventileinheit 5 ein 3/2-Wege-Ventil verwendet wird und bei der zweiten Ventileinheit 6 ein 5/2-Wege-Ventil verwendet wird. Es sind jedoch auch andere Ventile, insbesondere Schieberventile oder mehrere Einzelventile, welche die entsprechende Umsetzung der Leitungsverbindungen ermöglichen, verwendbar.

Es sei ferner angemerkt, dass im Betrieb der Vielzahl von Hauptbrennern 2 durch das Vorsehen von zwei Leitungssträngen 21, 22 eine große Kraftstoffmenge in die Hauptverteilungsleitung 23 einbringbar ist. Hierdurch können auch Leistungsspitzen abgedeckt werden.

Somit wird eine Brennstoffeinspritzvorrichtung mit einer Brennstoffhauptleitung 20 mit einem ersten und zweiten Leitungsstrang 21, 22 vorgeschlagen, wobei einer der beiden Leitungsstränge bei einem ausschließlichen Pilotbrennerbetrieb als Rückleitung fungiert, um Brennstoff von der Hauptverteilungsleitung 23 zurück in die Brennstoffpilotleitung 20 zu führen. Dadurch kann ein besonders kompakter und platzsparender Aufbau, insbesondere auch mit geringem Gewicht, erreicht werden.

### Bezugszeichenliste

- 1: Brennstoffeinspritzvorrichtung
- 2: Hauptbrenner
- 3: Pilotbrenner
- 4: Stellvorrichtung
- 5: erste Ventileinheit
- 6: zweite Ventileinheit
- 7: erste Verbindungsleitung
- 8: zweite Verbindungsleitung
- 9: Tankanschluss
- 10: Steuereinheit
- 11: Rückschlagventil
- 20: Brennstoffhauptleitung
- 21: erster Leitungsstrang
- 22: zweiter Leitungsstrang
- 23: Hauptverteilungsleitung
- 23a: erster Ringabschnitt
- 23b: zweiter Ringabschnitt
- 24: erster Anschluss
- 25: zweiter Anschluss
- 26: Stichleitung
- 30: Brennstoffpilotleitung
- 31: Pilotzufuhrleitung
- 32: Pilotverteilungsleitung
- 33: Stichleitung
- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Kerntriebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus

- A: Strömung des Brennstoffs in der Brennstoffpilotleitung
- B: Strömung des Brennstoffs in der Brennstoffhauptleitung
- C: Strömung des Brennstoffs aus einem Tank

## Patentansprüche

1. Brennstoffeinspritzvorrichtung (1), umfassend:
- eine Vielzahl von Hauptbrennern (2),
- eine Vielzahl von Pilotbrennern (3),
- eine Brennstoffhauptleitung (20) mit einem ersten Leitungsstrang (21), einem zweiten Leitungsstrang (22) und einer Hauptverteilungsleitung (23),
- eine Brennstoffpilotleitung (30) mit einer Pilotzufuhrleitung (31) und einer Pilotverteilungsleitung (32),
- wobei jeder Hauptbrenner (2) mit der Hauptverteilungsleitung (23) verbunden ist und jeder Pilotbrenner (3) mit der Pilotverteilungsleitung (32) verbunden ist,
- eine Stellvorrichtung (4) zum Bereitstellen von Brennstoff zur Brennstoffhauptleitung (20) und/oder zur Brennstoffpilotleitung (30), und
- eine Steuereinheit (10), welche eingerichtet ist, die Stellvorrichtung (4) zwischen einem ersten Modus für ausschließlichen Pilotbrennerbetrieb und einem zweiten Modus für einen gemeinsamen Pilotbrennerbetrieb und Hauptbrennerbetrieb derart zu stellen, dass im ersten Modus ein Tankanschluss (9) mit dem ersten Leitungsstrang (21) der Brennstoffhauptleitung verbunden ist und der zweite Leitungsstrang (22) der Brennstoffhauptleitung mit der Pilotzufuhrleitung (31) verbunden ist, um den Brennstoff vor dem Zuführen zur Brennstoffpilotleitung (30) durch die Brennstoffhauptleitung (20) zu führen, um eine Kühlung der Hauptbrenner (2) zu erreichen.

2. Brennstoffeinspritzvorrichtung nach Anspruch 1, wobei die Steuereinheit (10) eingerichtet ist, die Stellvorrichtung (4) im zweiten Modus für gemeinsamen Pilotbrennerbetrieb und Hauptbrennerbetrieb derart zu stellen, dass im zweiten Modus der Tankanschluss (9) mit der Pilotzufuhrleitung (31), dem ersten Leitungsstrang (21) und dem zweiten Leitungsstrang (22) verbunden ist.

3. Brennstoffeinspritzvorrichtung nach einem der vorhergehenden Ansprüche, wobei die Stellvorrichtung (4) eine erste Ventileinheit (5) und eine zweite Ventileinheit (6) umfasst, welche in Reihe zwischen dem Tankanschluss (9) und der Brennstoffhauptleitung (20) sowie der Brennstoffpilotleitung (30) angeordnet sind.

4. Brennstoffeinspritzvorrichtung nach Anspruch 3, wobei zwischen der ersten Ventileinheit (5) und der zweiten Ventileinheit (6) eine erste Verbindungsleitung (7) und eine zweite Verbindungsleitung (8) angeordnet ist.

5. Brennstoffeinspritzvorrichtung nach Anspruch 4, wobei die erste Ventileinheit (5) in jeder Stellung den Tankanschluss (9) mit der zweiten Verbindungsleitung (8) verbindet.

6. Brennstoffeinspritzvorrichtung nach Anspruch 5, wobei die zweite Ventileinheit (6) in jeder Stellung die erste Ventileinheit (5) mit dem ersten Leitungsstrang (21) der Brennstoffhauptleitung verbindet.

7. Brennstoffeinspritzvorrichtung nach einem der vorhergehenden Ansprüche, wobei die Hauptverteilungsleitung (23) der Brennstoffhauptleitung eine geschlossene Ringleitung ist.

8. Brennstoffeinspritzvorrichtung nach Anspruch 7, wobei ein erster Anschluss (24) des ersten Leitungsstrangs (21) an der Hauptverteilungsleitung (23) und ein zweiter Anschluss (25) des zweiten Leitungsstranges (22) an der Hauptverteilungsleitung (23) die Ringleitung in einen ersten Ringabschnitt (23a) und einen zweiten Ringabschnitt (23b) unterteilt, welche gleiche Leitungslängen aufweisen.

9. Brennstoffeinspritzvorrichtung nach einem der vorhergehenden Ansprüche, ferner umfassend eine Vielzahl von Sperrventilen (11), insbesondere druckgesteuerten Sperrventilen, wobei jeweils ein Sperrventil zwischen einem Hauptbrenner (2) und der Hauptverteilungsleitung (23) angeordnet ist.

10. Gasturbine, insbesondere Fluggasturbine, umfassend eine Brennstoffeinspritzvorrichtung nach einem der vorhergehenden Ansprüche.

11. Verfahren zum Betreiben einer Brennstoffeinspritzvorrichtung (1) einer Gasturbine, insbesondere Fluggasturbine, mit einer Vielzahl von Hauptbrennern (2) und einer Vielzahl von Pilotbrennern (3), wobei in einem ersten Modus ausschließlich die Pilotbrenner (3) betrieben werden, wobei ein Brennstoff vor dem Zuführen in eine Brennstoffpilotleitung (30) zum Kühlen der Hauptbrenner (2) durch eine Brennstoffhauptleitung (20), welche mit den Hauptbrennern verbunden ist, geführt wird, wobei die Brennstoffhauptleitung (20) einen ersten und zweiten Leitungsstrang (21, 22) aufweist und einer der beiden Leitungsstränge als Rückleitung verwendet wird, über welche der Brennstoff zur Brennstoffpilotleitung (30) geführt wird.

12. Verfahren nach Anspruch 11, wobei in einem zweiten Modus die Pilotbrenner (3) und die Hauptbrenner (2) gemeinsam betrieben werden, wobei Brennstoff gleichzeitig in die Brennstoffpilotleitung (30) und die Brennstoffhauptleitung (20) zugeführt wird.
